# EUROPEAN PATENT SPECIFICATION

(11) **EP 2 903 756 B1**
(45) Date of publication and mention of the grant of the patent: **23.11.2016**
(21) Application number: 14803173.5
(22) Date of filing: 28.11.2014
(51) Int. Cl.: B09B 1/00, C04B 28/02, E02D 31/00, C04B 111/00, C04B 28/00

(54) **METHOD FOR PRODUCING A WATER BARRIER MATERIAL AS LANDFILL COVER, CAPPING OR LANDFILL LINER UNDERNEATH AND/OR ASIDE A LANDFILL AND WATER BARRIER MATERIAL PRODUCED THEREBY**
VERFAHREN ZUR HERSTELLUNG EINES WASSERDICHTEN MATERIAL ZUM ÜBERZIEHEN, ABDECKEN ODER UNTERFÜTTERN UND ODER NEBEN EINER DEPONIE UND IN DIESEM VERFAHREN HERGESTELLTES WASSERDICHTES MATERIAL
MÉTHODE DE PRODUCTION DE MATÉRIAU BARRIÈRE À EAU COMME COUVERTURE DE DÉCHARGE, RECOUVREMENT OU CONFINEMENT DE DÉCHARGE SOUS ET/OU SUR LE CÔTÉ D'UNE DÉCHARGE, ET MATÉRIAU DE BARRIÈRE À EAU PRODUIT AINSI

(30) Priority: 13.12.2013 WO PCT/EP2013/076621
(43) Date of publication of application: 12.08.2015
(73) Proprietor: Recoval Belgium, 6240 Farciennes (BE)
(72) Inventor: BOUILLOT, Frédérique, 6110 Montigny-le-Tilleul (FR); DESCAMPS, Philippe, 6533 Biercee (BE); VAN MECHELEN, Dirk, 2830 Tisselt (BE)
(74) Representative: Gevers Patents
(86) International application number: PCT/EP2014/075991
(87) International publication number: WO 2015/086350

(56) References cited:
- DE-A1- 3 727 978
- DE-A1- 4 417 012
- DE-A1- 19 858 004
- DE-A1-102008 015 012
- Herrmann, I.: "Use of Secondary Construction Material in Landfill Cover Liners", http://www.ltu.se/cms_fs/1.10987!/ltu-lic- 0665-se.pdf Licentiate thesis, 31 December 2006 (2006-12-31), pages 1-75, XP055127435, Retrieved from the Internet: URL:http://www.ltu.se/cms_fs/1.10987!/ltu- lic-0665-se.pdf [retrieved on 2014-07-08] cited in the application
- D Boels ET AL: "Onderbouwing kwaliteitsboging Hydrostab; aanvullend veld-, laboratorium- en modelonderzoek", Alterra-Report 1374, 31 December 2006 (2006-12-31), XP055127170, Retrieved from the Internet: URL:http://www2.alterra.wur.nl/Webdocs/PDF Files/Alterrarapporten/AlterraRapport1374. pdf [retrieved on 2014-07-07] cited in the application
- Boels ET AL: "Durability of Hydrostab; a field investigation and prognosis", Alterra Report 1218, 31 December 2005 (2005-12-31), XP055127169, Retrieved from the Internet: URL:http://www2.alterra.wur.nl/Webdocs/PDF Files/Alterrarapporten/AlterraRapport1218. pdf [retrieved on 2014-07-07] cited in the application

## Description

The present invention relates to a method for producing a water barrier for use as landfill cover or capping or as landfill liner underneath or aside of a landfill.

The water barrier is made starting from a granular material which is mixed with a pozzolanic material which comprises solid particles and with a plasticizing material to produce a mixture. To reduce the hydraulic conductivity of the water barrier material formed by said mixture, the pores present in this mixture are at least partially filled with a silica-gel.

Such water barrier materials are for example used for soils containment or to cap landfills. They can also be applied as landfill liner, more particularly as a base layer underneath landfills or as walls bordering a landfill. A water barrier material which is already in commercial use is the so-called "Hydrostab" material. This water barrier material has been studied already thoroughly and is described in a number of scientific publications. Reference can be made for example to the Alterra-report 1218 (Boels, D. et al. "Durability of Hydrostab; a field investigation and prognosis'*),* to the Alterra-report 1374 (Boels, D. et al. "Onderbouwing kwaliteitsborging Hydrostab; aanvullend veld-, laboratorium- en modelonderzoek*"* and to the final report of ECN (Energy research Center of the Netherlands) (van der Sloot, H.A. et al. "Second opinion: Duurzaamheid integrale afdichtingsconstructie met Hydrostab op stortplaatsen*".*

As disclosed in these reports the Hydrostab water barrier material is made by mixing soil or screening sand (40 - 50% by dry weight, in particular 42.5%) with sewage sludge (40 - 45 % by dry weight, in particular 42.5%), fly ash (about 10 % by dry weight, in particular 11%) and waterglass (1 - 5 % by weight, in particular 4%). The soil or the screening sand provides a granular matrix which is as such not plastic and which is also water permeable. To make the Hydrostab material plastic, a quite large amount of sewage sludge is added as a plasticizing material. For a landfill capping material plastic properties are important since due to differential settings of the waste materials in the landfill the water barrier material should be able to deform without producing cracks through which water might penetrate through the water barrier. An additional advantage of the plasticizing material is that it also improves the water retention properties of the water barrier material so that the material doesn't dry out and doesn't loose its water sealing properties.

Although the permeability of the water barrier material is already reduced somewhat by the presence of the sewage sludge, a further reduction of the hydraulic conductivity is required to achieve for example the low permeability values of clay, which is also used in practice as landfill cover. The hydraulic conductivity of a landfill cover made of clay comprises for example about 10⁻⁹ m/s. In order to achieve such a reduced hydraulic conductivity, the pores in the Hydrostab material are at least partially filled with a silica-gel. As described in the different reports, two gel materials are to be formed in the Hydrostab material, namely a silica-gel and a calcium-silicate-hydrate gel (CSH gel). The silica-gel is produced by adding waterglass (water soluble sodium silicate) to the mixture whilst the CSH gel is produced by alkaline activation of the fly ash in the mixture. This alkaline activation is achieved by means of the alkaline waterglass. According to Alterra-report 1374, the fly ash should contain a sufficient amount of reactive or free calcium oxide in order to be able to produce the required amount of CSH gel by a pozzolanic reaction with the amorphous silicates contained in the fly ash, suitable fly ashes being described as class C fly ashes containing 20 to 30% calcium oxide.

The use of waterglass in combination with sewage sludge for producing a water barrier material is also disclosed in DE 10 2008 015 012. This barrier material had an acid pH value. Also in DE 198 58 004 an acid material is obtained by injecting a mixture of waterglass and an acid reactant in the soil. In DE 37 27 978 a water barrier material is prepared by mixing sewage sludge, waterglass and for example ground blast furnace slags or waste incineration slags. DE 44 17 012 discloses a mixture of sewage sludge and highly active fly ash which has a high pH value so that the obtained mixture is biologically inert.

A problem addressed in the Hydrostab reports is that the silica-gels, which provide for the reduced hydraulic conductivity, are metastable phases which transform over time into quartz according to the Alterra report and loose their structure in this transformation. Although this is a slow process, it affects the durability of the Hydrostab material which should be sufficiently long, in particular 100 years or even longer. To achieve such a long durability, an essential feature of the Hydrostab material is that it should contain a sufficient amount of CSH gels. These CSH gels are stable and slowly disintegrate thereby producing new silica-gel material. In the first years the amount of silica-gel increases thereby. Once all the CSH gel has disappeared, the amount of silica-gel slowly decreases.

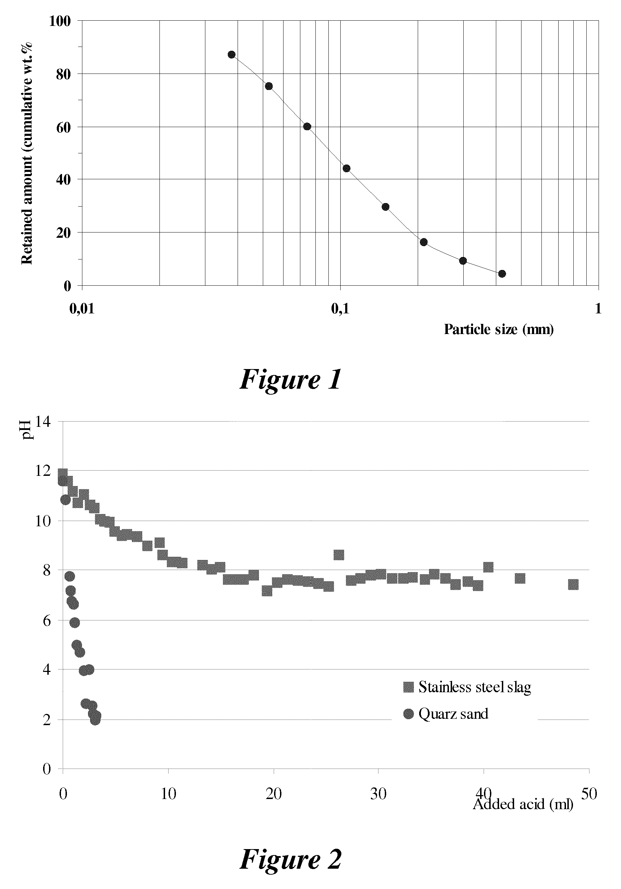

A further essential feature of the Hydrostab material is that it should have a sufficiently low pH in order to enable the production of new silica-gel by the disintegration of the CSH gel. The Hydrostab material should in particular have a pH of about 7.5 or lower as at a pH between 7.5 and 8 the velocity at which the CSH gel dissolves quickly drops down to zero (see Fig. 2.1 of the ECN report). Although use is made of alkaline waterglass in the production of Hydrostab, the buffering effect of the sewage sludge and the relatively low pH of the soil or the screening sand enable to achieve a mixture with a sufficiently low pH.

A problem with the CSH gel which is to be produced in the Hydrostab material to achieve the required durability of the material is that the amount thereof should not be too high due to the hardening effect produced by the CSH gel (in the same way as the CSH gel produced during cement setting). Consequently, the amount of CSH gel produced in the Hydrostab material should be kept between quite narrow limits. Alterra-report 1374 prescribes for example that the amount of CSH gel in Hydrostab should be between 20 and 40 g/kg dry matter in order to achieve a sufficiently long durability of at least 100 years and in order to avoid the formation of a too stiff/hard layer. The upper limit at which a stiff and brittle layer would be formed has however not been determined so that this upper limit will be higher than 40 g CSH/kg dry matter. According to the Alterra-report 1374 the composition of the CSH would correspond to Tobermorite (Ca₅Si₆O₁₆(OH)₂.8H₂O). Consequently, 40 g CSH/kg would correspond to about 16 g CaO/kg or about 1.6% by weight CaO in the Hydrostab material.

A drawback of the Hydrostab material is that the amounts of the different materials used to produce Hydrostab have to be carefully controlled and that the required amounts of these materials even depend on the composition of the different materials. For example the required amount of fly ash depends on its reactive/free calcium oxide content. The maximum durability of Hydrostab is also limited by the maximum amount of CSH gel which may be contained in the Hydrostab material. A further drawback is that a relatively large amount of waterglass, which is quite expensive, is required to produce the silica-gel and to activate the fly ash.

Apart from the Hydrostab material, other materials are used as barrier materials for landfill covers/liners. The licentiate thesis of Inga Herrmann *"Use of Secondary Construction Materials in Landfill Cover Liners"* describes for example the use of fly ash in combination with lime and also the use of steel slag as main material for landfill covers. In these alkaline materials CSH gels are formed by cementitious/pozzolanic reactions which provide for some reduction of the hydraulic conductivity of the material but also for an increased stiffness of the barrier material. The use of an alkaline mixture of sewage sludge, lime and fly ash as a hardenable landfill cover material is also disclosed in US 5 277 826 and US 4 028 130. Cement kiln dust (CKD) is a further alkaline material which can be used as landfill cover (see for example the paper *"Beneficial Use of Industrial By*-*Products*", December 2003, RMT, Inc.). CKD comprises however a lot of cementitious materials (di- and tricalcium silicates) and produces thus a large amount of CSH gels with hardening properties.

None of the publications disclosing the use of these alkaline secondary materials in landfill cover describes the formation of a silica-gel material to reduce the hydraulic conductivity of the barrier material and this without negatively affecting the plasticity thereof. Moreover, the Hydrostab reports teaches away of using such alkaline materials as an alternative to the soil or the screening sand in the Hydrostab material since, due to their alkaline nature, they would increase the pH of the material to a pH above 8 so that the transition of CSH gel to silica-gel required to replenish the silicagel which is lost over time, would no longer take place.

An object of the present invention is to provide a new method which enables to produce a water barrier material for use as landfill cover or capping or as landfill liner underneath or aside of a landfill which contains, just like the Hydrostab material, silica-gel to reduce the hydraulic conductivity of the material without affecting the plasticity thereof but which does not require the use of waterglass to produce the silica-gel and which also does not require the presence of CSH gels and a relatively low pH to replenish the amount of silica-gel which disappears in the course of time.

To this end, the method according to the invention is characterised in that said granular material comprises a comminuted steel slag material:
- which has a calcium content, expressed as % CaO, of at least 30% by dry weight and a silicon content, expressed as % SiO₂, of at least 15% by dry weight;
- which is alkaline and incorporated in an amount of at least 40% by dry weight in the water barrier material so that the water barrier material has a pH higher than 8, preferably higher than 8.5 and more preferably higher than 9;
- which comprises more than 50% by dry weight of crystalline phases;
- which has a particle size distribution showing a D₁₀ value smaller than 100 µm,
and in that said pozzolanic material comprises at least silicon and either no calcium or such an amount of calcium that it has a basicity, defined as the ratio between its calcium content, expressed as % CaO, and its silicon content, expressed as % SiO₂, which is smaller than 0.20, preferably smaller than 0.15, the silica-gel being produced by alkaline activation of the solid particles of said pozzolanic material at least partially in the alkaline water barrier material and optionally in an alkaline solution before being mixed with said granular material with a portion of the solid particles of the pozzolanic material remaining in the barrier material.

In the method of the present invention, no waterglass has to be used to produce the silica-gel material since this silica-gel material is produced from a pozzolanic material, which is preferably a waste material such as glass cullet, class F fly ash or silica fume. The pozzolanic material has to have a basicity which is smaller than 0.2 so that by alkaline activation thereof silica-gel is produced and optionally only a relatively small amount of CSH gel.

The granular material used in the method of the present invention is an alkaline steel slag which is mainly crystalline, i.e. which comprises more than 50% by dry weight of crystalline phases. Due to the mainly crystalline nature of the steel slag, it has only a limited reactivity so that it nearly doesn't have any pozzolanic or hydraulic properties. Consequently, it substantially doesn't produce any CSH gel.

The alkaline steel slag provides for a buffering effect so that the pH of the barrier material remains high, in particular higher than pH 8. At such a high pH there is a slow but continued activation of the portion of the solid particles of the pozzolanic material that remain in the barrier material so that there is a continuous production of new silica-gel material. The silica-gel disappearing, according to the Alterra report 1218, by its transformation into quartz is thus continuously replenished by newly formed silica-gel phases. Moreover, in case some small cracks would be formed in the barrier layer, these cracks can be filled with newly formed silica-gel so that the barrier material has self-repairing properties. Due to the fact that, in contrast to the CSH gels in the Hydrostab material, the pozzolanic material itself, and also the silica-gel material produced therewith, has no effect on the stiffness or on the plasticity of the barrier material, it may be included in the barrier material in the amounts required to achieve the desired durability.

In an advantageous embodiment of the method according to the present invention the stainless steel slag material comprises no free lime or has a free lime content which is smaller than 6% by dry weight, preferably smaller than 4% by dry weight, more preferably smaller than 2% by dry weight and most preferably smaller than 1% by dry weight free lime expressed as CaO.

Such low free lime contents enable to incorporate a considerable amount of the comminuted steel slag material in the barrier material, in particular more than 40% by dry weight thereof, without achieving a stiff barrier material, i.e. leading to a barrier material which remains plastic.

The steel slag may be a common steel slag, such as an LD slag, but preference is given to a stainless steel slag material. An advantage of a stainless steel slag material is indeed that it has a considerably smaller free lime content than the common steel slags. The advantage of having a small free lime content is that the production of the silica-gel material by alkaline activation of the pozzolanic material is less disturbed by any pozzolanic reaction between the free lime contained in the granular material and the pozzolanic material resulting in the formation of a CSH gel instead of a silica-gel.

The term "free lime" encompasses not only free calcium oxide but also free calcium hydroxide (Portlandite) resulting from the hydration of the free calcium oxide. It however does not encompass any calcium carbonate which may have been formed by reaction of the calcium hydroxide with for example carbon dioxide during a natural or artificial (accelerated) aging of the stainless steel slag material. Such carbonates indeed do not react with the pozzolanic material to produce CSH gel instead of the desired silica-gel. The free lime content of the steel slags can thus be reduced by carbonating the steel slag material before mixing it with the other raw materials to produce the water barrier material.

The comminuted steel slag material used in the method of the present invention has a particle size distribution showing a D₁₀ value which is smaller than 100 µm. The D₁₀ value is defined as the size of the openings of a sieve through which 10 vol. % of the steel slag particles pass whilst 90 vol. % of the steel slag particles are retained or in other words it is the particle size at 10 vol. % cumulative passing; The D₁₀ value can be determined by dry sieving (by means of sieves having different sizes of openings) or by means of laser diffraction, as described for example in ISO 13320. Especially for small particles sizes, in particular for particle sizes smaller than 38 µm, such laser diffraction measurements are to be used. By using such a fine granular material, the granular material as such has already a lower permeability compared to coarser granular materials which have a same particle size uniformity coefficient and which are compacted under a same pressure.

The particle size uniformity coefficient of the comminuted steel slag material is defined as the ratio between its D₆₀ value and its D₁₀ value, with the D₆₀ value being defined as the size of the openings of a sieve through which 60 vol. % of the steel slag particles pass whilst 40 vol. % of the steel slag particles are retained, i.e. it is the particle size at 60 vol. % cumulative passing.

In a preferred embodiment of the method according to the present invention, the particle size uniformity coefficient of the comminuted steel slag material is larger than 2, preferably larger than 4 and more preferably larger than 6.

An advantage of a larger particle size uniformity coefficient is that the porosity of the material is lower and thus also the permeability of the material for a same compaction pressure.

In a further preferred embodiment of the method according to the present invention the pozzolanic material has a silicon content, expressed as % SiO₂, of at least 45%, preferably of at least 55% and more preferably of at least 65 % by dry weight. Combined with the relatively low basicity of the pozzolanic material, a relatively large amount of silica-gel is produced compared to the amount of CSH gel which may optionally also be produced.

The pozzolanic material may in particular comprise class F fly ash, i.e. fly ash which comprises less than 20% by dry weight CaO, preferably even less than 10% by dry weight.

In an advantageous embodiment of the method according to the present invention the pozzolanic material comprises however glass powder, in particular soda-lime glass powder. The glass powder comprises preferably comminuted glass cullet particles.

Glass cullet is a waste product comprising industrial silicate glass and flat and hollow (container) glass that cannot be introduced in a furnace to be valorised. The glass powder used in the method according to the present invention comprises preferably more than 60% more preferably more than 65% by dry weight of SiO₂.

Another preferred pozzolanic material is silica fume. Silica fume is an amorphous polymorph of silicon dioxide. It is an ultrafine powder containing more than 85% by dry weight of SiO₂. As it contains no or nearly no CaO, only silica-gel is formed in the absence of CaO.

In a further advantageous embodiment of the method according to the invention, the pozzolanic material has a Blaine specific surface area of at least 1000 cm²/g, preferably of at least 2000 cm²/g, and more preferably of at least 3000 cm²/g.

The higher the Blaine value of the pozzolanic material, the higher the rate at which the silica-gel material is produced. This is especially important when the pH of the pozzolanic material is relatively close to neutral since the dissolution rate of pozzolanic materials, in particular of glass and fly ash, is the lowest at about pH 7 and increases exponentially with higher pH values. In this respect, the water barrier material has preferably a pH higher than 8.5 and more preferably higher than 9. Moreover, the portion of the solid particles of the pozzolanic material which remains in the barrier material forms a fine fraction which has a positive effect on the permeability of the barrier material.

The pH of the barrier material, or of any other of the materials, as defined in the present patent specification is to be measured by comminuting the material to a particle size of less than 10 mm, by suspending the obtained solid particles in pure water at a liquid/solid ratio equal to 10, by shaking the obtained suspension during 24 hours, by allowing the solid particles to settle and by measuring the pH of the liquid which is in contact with the settled particles (as described for example also in DIN 38414 S4).

In a particular embodiment of the method according to the invention the solid particles of the pozzolanic material are activated in an alkaline solution before being mixed with the granular material. This alkaline solution is made with at least one alkaline substance which is different from waterglass and which comprises preferably sodium and/or potassium hydroxide. An alkaline solution comprising calcium oxide/hydroxide can also be used but this may lead to a larger amount of CSH gel in the barrier material by a pozzolanic reaction with the pozzolanic material.

Due to the high pH of such alkaline solution, the pozzolanic material can be activated relatively quickly to produce an amount of silicagel material, which is subsequently mixed with the granular material to reduce the permeability thereof. This embodiment of the invention is in particular useful in case the granular material has a relatively low pH. This is for example the case when the steel slag material has already been carbonated to some extent to reduce the free lime content thereof. Such a prior carbonation can be carried out by a natural aging of the steel slag material or under accelerated carbonation conditions, for example with a higher carbon dioxide concentration, in particular with a gas containing at least 1 vol.% carbon dioxide.

In a preferred embodiment of the method according to the present invention the plasticizing material comprises sewage treatment sludge and/or a clay material. The plasticizing material preferably comprises a clay material which comprises at least 20, preferably at least 30, and more preferably at least 40 % by dry weight of clay particles having a size of less than 2 µm, said clay material comprising in particular a clay soil.

Compared to sewage treatment sludge, a clay material has the advantage that it reduces the leaching of some heavy metals from the barrier material, in particular of nickel.

The plasticizing material is preferably added in such an amount to said mixture that said mixture has a plasticity index which is higher than 1, preferably higher than 2, more preferably higher than 3 and most preferably higher than 4, the plasticity index being the difference between the liquid limit of the mixture and the plastic limit of the mixture, both measured in accordance with the ASTM standard test method D 4318. These limits are also known as the Atterberg limits.

The present inventors have found quite surprisingly that notwithstanding the granular character of the finely comminuted steel slag particles, it is possible to achieve a mixture which is at least slightly plastic (i.e. having a plasticity index between 1 and 5) which is enough for landfill cover applications. A comparative test with river sand instead of the comminuted steel slag revealed that with river sand no cohesion at all could be obtained.

The present invention also relates to a water barrier material for use as landfill cover or capping or as landfill liner underneath or aside of a landfill obtained by the method according to the present invention and also to the use of this water barrier material for producing a water barrier underneath, aside and/or on top of a landfill.

Other particularities and advantages of the invention will become apparent from the following description of some particular embodiments of the method according to the present invention. When amounts are indicated in percent in this description, and in the claims, these percentages are percentages by dry weight, unless indicated differently. In the examples reference is made to the annexed drawings wherein:
Figure 1 is a graph representing the particle size distribution of the fine fraction of the crushed stainless steel slag used in Experiment 1, the particle size distribution being measured by dry sieving; and
Figure 2 shows the titration curves of a stainless steel slag material and of quartz sand illustrating the buffering effect of the stainless steel slag material. The present invention generally relates to a method for producing a water barrier material. The water barrier material is in particular intended as landfill cover or capping or as landfill liner underneath and/or aside a landfill. When used as landfill cover, the water barrier material should preferably remain at least slightly plastic (i.e. have a plasticity index of at least 1) so that no cracks are formed in the water barrier material upon differential setting of the waste material contained in the landfill after having applied the water barrier material on top of the landfill. At a later stage, the water barrier material may become stiffer (i.e. less plastic), for example by a natural carbonation of the steel slag material contained therein. When used as landfill liner (i.e. on the bottom of the landfill), the material may become immediately stiffer. In some cases it may even be advantageous to add for example cementitious materials or carbonating agents, such as for example carbonates like potassium and sodium carbonate or bicarbonate in combination with for example calcium or magnesium hydroxide, in order to increase the strength of the barrier material.

In practice natural clay materials are often applied as landfill cover or lining. For these applications, clay materials should provide a permeability which is less than 1.0 10⁻⁹ m/s in the Walloon Region of Belgium.

In the method of the present invention the water barrier material is mainly made of waste materials instead of natural materials. These materials comprise first of all a granular material that comprises a comminuted steel slag material and further a plasticizing material and a pozzolanic material. The pozzolanic material should show a basicity, i.e. a ratio between its CaO content (i.e. its calcium content expressed as % CaO) and its SiO₂ content (i.e. its silicon content expressed as % SiO₂), which is smaller than 0.20 and preferably smaller than 0.15. This pozzolanic material is activated under alkaline conditions so that a silica-gel material is produced. This silica-gel material fills the pores of the mixture of comminuted steel slag material and plasticizing material at least partially to reduce the permeability, i.e. the hydraulic conductivity, of this mixture. The pozzolanic material comprises solid particles which remain at least partially in the barrier material. The alkaline steel slag material is incorporated in such an amount in the water barrier material that this barrier material is alkaline, and has in particular a pH higher than 8. Due to the high pH of the barrier material, the production of silica-gel material continues in-situ in this water barrier material. In this way, the low permeability of the barrier material is maintained for a very long period of time. By the in-situ gel formation, the permeability of the barrier material becomes even lower during at least the first months after having produced the barrier material.

The steel slag material used in the method of the present invention should be a relatively fine material. It should more particularly have a D₁₀ value on dry sieving which is smaller than 100 µm, preferably smaller than 70 µm, more preferably smaller than 40 µm and most preferably even smaller than 20 µm. A finer steel slag material enables to achieve a lower permeability.

The steel slag material may be a common steel slag material produced for example in a basic oxygen steelmaking furnace starting from pig iron. This steel slag material is in particular an LD steel slag material. The steel slag material used in the method of the present invention is however preferably a stainless steel slag material. Stainless steel slag is produced during the production of stainless steel. The stainless steel may be chromium steel or nickel-chromium steel. In general, the stainless steel has a chromium content of at least 1000 mg Cr/kg, more particularly of at least 2000 mg Cr/kg. Preferably the stainless steel slag is a nickel-chromium stainless steel slag having a nickel content of at least 50 mg Ni/kg, more preferably at least 100 mg/kg. The slag may be electric arc furnace (EAF) slags, converter slags such as AOD (Argon Oxygen Decarburation) and VOD slags (Vacuum Oxidising Decarburation) or a mixture thereof.

The steel slag material has a calcium content of at least 30%, in particular at least 40% by dry weight CaO and a silicon content of at least 15%, in particular at least 20% by dry weight SiO₂ (the calcium and silicon contents are based on the molecular weight of CaO and SiO₂ respectively but the calcium and silicon do not have to be present in their oxide form but are in particular in other amorphous or crystalline phases, in particular in silicates). The hot slag material removed from the liquid steel is not quenched to produce an amorphous material but is relatively slowly cooled down so that the solidified steel slag is mainly crystalline. The steel slag material used in the method of the present invention comprises preferably more than 50% by dry weight, more preferably more than 60% by dry weight and most preferably more than 70% by dry weight of crystalline phases, the remaining phases being amorphous. The steel slag material preferably has substantially no hydraulic properties. In the method of the present invention it is important for the stainless steel slag material not to contain too much amorphous phases since such amorphous phases may be activated under alkaline conditions so that, due to its relatively high calcium content, too much CSH gel (calcium-silicate-hydrate) could be formed.

The way wherein a molten stainless steel slag can be treated to recover valuable stainless steel particles and to produce aggregates or fine filler materials which can be used as secondary construction materials, is for example disclosed in EP-B-0837043 and in EP-B-2160367. The molten steel slag is poured into large pits wherein it is cooled down relatively slowly. The large pieces of solidified stainless steel slag are crushed to produce for example coarse and/or fine aggregates that can be used for example in concrete or asphalt. By further milling these aggregates a filler material can be produced which can also be used in concrete or asphalt. During the crushing process valuable stainless steel particles are recovered from the crushed steel slag.

A problem of this known recycling process is that also a fine stainless steel slag fraction is produced. This fraction has in particular a particle size of less than 500 µm. Due to its high water absorption property it cannot be used as such in concrete or asphalt. A large portion of the small stainless steel slag particles are caused by the transition of β-dicalcium silicates into γ-dicalcium silicates in the stainless steel slag. Upon this transition, an expansion of these crystalline phases occurs resulting in a pulverisation of the slag material and the formation of cracks/micro cracks therein. This fine stainless steel slag fraction has a relatively high γ-dicalcium silicate content, namely a γ-dicalcium silicate content of at least 2 %, in particular at least 3 % and more particularly even at least 4 % by dry weight of the crystalline phases of the slag material.

It has been found that this fine steel slag fraction has such a particle distribution, and contains such an amount of fine particles (fines) that a water barrier material can be produced therewith which has a higher cohesion than a water barrier material which is produced with river sand and which also has a lower hydraulic conductivity.

Due to this new valuable application of the fine steel slag fraction, it is also possible to produce a larger amount of fine steel slag material by finely milling the stainless steel slag material so that the milled material has a particle size distribution which shows a D₁₀ value which is smaller than 100 µm, preferably smaller than 70 µm and more preferably smaller than 40 µm. Milling the steel slag material to a smaller particle size enables to recover more valuable steel from the slag material, in particular stainless steel. Preferably, the steel slag material which is milled is a steel slag fraction which still contains a relatively high amount of stainless steel. It can for example be separated off by magnetic separation or by another separation technique for example by a density separation technique (in particular by means of a JIG as disclosed in EP-A-1312415).

An advantage of the fine steel slag fractions is also that they have a relatively large particle size uniformity coefficient. This coefficient is defined as the ratio between the D₆₀ value of the fraction and its D₁₀ value. The larger this uniformity coefficient, the smaller the porosity of the material (at a same degree of compaction) and thus also the smaller its hydraulic conductivity. The steel slag fraction used to produce the water barrier material therefore preferably has a particle size uniformity coefficient which is larger than 2, preferably larger than 4 and more preferably larger than 6.

In the method of the present invention, the steel slag material is incorporated in the water barrier material in an amount of at least 40% by dry weight. In a preferred embodiment, this amount comprises at least 50%, preferably at least 60% and more preferably at least 70% by dry weight of the water barrier material. The steel slag material may be one single steel slag material or a mixture of two or more steel slag materials. Due to the alkaline nature of the steel slag material, this material contributes to the alkalinity of the water barrier material. In order to achieve a continuous in situ silica-gel formation by alkaline activation of the portion of the solid particles of pozzolanic material that remain in the water barrier material, this material should have a pH higher than 8.0. Preferably, it has even a higher pH, more particularly a pH higher than 8.5 and preferably higher than 9.0.

An essential feature of the method of the present invention is that a silica-gel material is formed by alkaline activation of the pozzolanic material. Such a pozzolanic material can however also react with free lime (calcium oxide and/or calcium hydroxide) contained in the mixture so that a CSH gel would be formed rather than a silica-gel. Although some amount of CSH gel may be formed in the water barrier material, especially when the water barrier material is used as landfill liner which does not have to be plastic, the CSH gel formation competes with the silica-gel formation. The presence of silica-gel in the water barrier material is however essential due to the fact that silica-gel provides a more effective water barrier than a CSH gel and that silica-gel prevents the moisture contained in the water barrier from escaping so that the sealing properties of the water barrier material are maintained. In contrast to a silica-gel, a CSH gel dries more quickly out and becomes stiffer more quickly thereby losing its water sealing properties.

An advantage of stainless steel slag compared to for example common steel slag, such as LD slag, is that stainless steel slag has a lower free lime content. The steel slag material used to prepare the water barrier material contains no free lime or has a free lime content which is preferably smaller than 6% by dry weight, more preferably smaller than 4% by dry weight, most preferably smaller than 2% by dry weight and even more preferably smaller than 1% by dry weight free lime expressed as CaO. The free lime content of the steel slag material can be reduced by bringing this material in contact with carbon dioxide, in particular with gaseous carbon dioxide so that the free lime is converted to carbonate. This can be done by natural carbonation, wherein the steel slag material is allowed to carbonate under atmospheric conditions, or by an accelerated carbonation wherein the steel slag material is brought in contact with a gas that contains more carbon dioxide than air, more particularly with a gas that contains at least 1, preferably at least 5 and more preferably at least 10 vol.% of carbon dioxide.

Due to its low free lime content, stainless steel slag material used to produce the water barrier material is preferably not carbonated, or only to a little extent, so that it contains less than 5%, preferably less than 3% and more preferably less than 1% by dry weight of carbonates. An advantage of such low carbonate contents is that the slag material still has a higher pH enabling more in situ silica-gel formation. Moreover, the carbonates formed during a carbonation step bind the slag particles to one another so that the resulting pieces have to be crushed or milled again to obtain the required particle size distribution (with the required amount of fine particles).

Due to the granular nature of the steel slag material, a gel has to be incorporated therein in order to reduce the hydraulic conductivity, in particular in order to be able to achieve a hydraulic conductivity equal to or less than 1.0 10⁻⁹ m/s. The silica-gel employed in the method of the present invention is produced by alkaline activation of a pozzolanic material which has a basicity, i.e. a CaO/SiO₂ ratio (both amounts in % by dry weight), which is smaller than 0.20, preferably smaller than 0.15. The pozzolanic material preferably has a relatively high SiO₂ content (i.e. a silicon content expressed as % SiO₂), in particular an SiO₂ content of at least 45%, preferably of at least 55% and more preferably of at least 65% by dry weight.

The pozzolanic material may comprise silica fume. Silica fume has a high SiO₂ content, more particularly an SiO₂ content of more than 85% by dry weight of SiO₂. It contains no or nearly no CaO so that it has a very low basicity. An advantage of silica fume is therefore that substantially only silica-gel is formed in case no CaO is present in the mixture.

The pozzolanic material may also comprise natural pozzolans, in particular natural pozzolans classified by ASTM C 618 (AASHTO M 295) as Class N pozzolans. These include calcined clay and calcined shale.

A more preferred pozzolanic material comprises fly ash. This fly ash should be a fly ash having a basicity smaller than 0.20 and preferably smaller than 0.15. The fly ash is in particular ASTM C 618 (AASHTO M 295) Class F fly ash. These Class F fly ash materials are low-calcium (generally less than 10% CaO) fly ashes with pozzolanic properties but without cementitious properties. They have relatively high SiO₂ contents, in particular SiO₂ contents higher than 50% by dry weight.

Another more preferred pozzolanic material comprises glass powder, in particular soda-lime glass powder. This glass powder can be made by milling glass cullet, which is a waste product comprising industrial silicate glass and flat and hollow (container) glass that cannot be introduced in a furnace to be valorised in the production of new glass.

The pozzolanic material may also be a mixture of these pozzolanic materials.

The pozzolanic material has to produce a silica-gel by alkaline activation of the solid particles. These solid particles preferably have a large surface to increase the rate of silica-gel formation. The Blaine specific surface area of the pozzolanic material should therefore preferably be equal to or higher than 1000 cm²/g, more preferably equal to or higher than 2000 cm²/g, and most preferably equal to or higher than 3000 cm²/g.

The pozzolanic material is preferably used in an amount of at least 2, preferably at least 3, more preferably at least 4 and most preferably at least 5 parts by dry weight for producing 100 parts by dry weight of the water barrier material. The amount of pozzolanic material used to produce the barrier material is preferably less than 20 parts by dry weight for producing 100 parts by dry weight of the water barrier material.

Due to the alkaline nature of the barrier material, the solid particles of the pozzolanic material are activated in situ in the barrier material itself. The solid particles of the pozzolanic material dissolve very slowly in the moisture contained in the barrier material so that new silica-gel material is continuously produced therein.

In order to produce initially a larger amount of silica-gel material, the pozzolanic material can be activated in an alkaline aqueous solution before being mixed with the stainless steel slag material. This is especially advantageous when the steel slag material has a reduced pH by being already carbonated to some extent. The alkaline solution may comprise calcium hydroxide. In view of the CSH gel formation which is preferably to be avoided, the alkaline solution comprises however preferably sodium and/or potassium hydroxide.

In the method according to the present invention, the granular material is not only mixed with a pozzolanic material but also with a plasticizing material. This plasticizing material increases the plasticity or workability of the mixture. Moreover, it improves the water retention properties of the water barrier. This is also important since the silica-gel contained in the barrier material should remain wet in order to be able to exert its water sealing function.

The plasticizing material may comprise sewage treatment sludge. This sludge may comprise primary sludge, produced by allowing the solids contained in the waste water to settle, and also activated sludge produced during the biological treatment of waste water. The primary sludge is usually digested microbiologically. The sludge is preferably dewatered and can additionally be hygienised by means of calcium oxide.

The sludge is a colloidal material that contributes to the silicagel formation. In fact an organo-silica-gel material is formed in the presence of the sewage sludge. It also assists in increasing the water retention of the barrier material and it especially improves the plasticity thereof.

The plasticizing material may also comprise a clay material. The clay material preferably comprises at least 20, preferably at least 30, and more preferably at least 40 % by dry weight of clay particles having a size of less than 2 µm. The clay material can be a pure clay but it may also be for example a clay soil which is much cheaper than a pure clay. The clay soil can be for example of type E (clay soil) or of type U (heavy clay soil) of the Belgian soil texture classification. An advantage of the use of a clay material is that it reduces the leaching of heavy metals from the stainless steel slag material, in particular the leaching of nickel and chromium compared to the leaching of these heavy metals from a water barrier material that contains sewage sludge as plasticizing material.

The plasticizing material may also be a mixture of different plasticizing materials. It constitutes preferably at least 1%, more preferably at least 2%, most preferably at least 3% and even more preferably at least 4% by dry weight of the water barrier material. Preferably, the barrier material comprises less than 50%, preferably less than 40%, more preferably less than 30% and most preferably less than 20% by dry weight of the water barrier material.

The plasticizing material is in particular added in such an amount that the water barrier material has a plasticity index which is higher than 1, preferably higher than 2, more preferably higher than 3 and most preferably higher than 4. The plasticity index is the difference between the liquid limit of the mixture and the plastic limit of the mixture, both measured in accordance with the ASTM standard test method D 4318.

By compacting the water barrier material the porosity thereof is reduced and the dry density increased. The water barrier material is preferably compacted to a dry density of at least 1400 kg/m³.

The method according to the present invention enables to produce a water barrier material which has a hydraulic conductivity, measured with an oedometer-permeameter in accordance with the standard NBN CEN ISO/TS 17892-11, which is smaller than 1.10⁻⁹ m/s, in particular smaller than 1.10⁻¹⁰ m/s or even smaller than 1.10⁻¹¹ m/s.

### EXPERIMENTAL TEST RESULTS

### Experiment 1

In this experiment, and also in the other experiments unless indicated otherwise, water barrier materials were made by mixing a granular stainless steel slag material with a plasticizing material and with a pozzolanic material that has been activated under alkaline conditions. Sodium hydroxide was more particularly first diluted in water (to make a saturated solution) and was allowed to cool down to ambient temperature. Subsequently glass powder (i.e. the pozzolanic material) was mixed with this alkaline solution for about 1 hour. The granular material was mixed with the plasticizing material (and with the calcium oxide when used) and homogenised for 5 minutes. The activated glass powder was then added to that mixture, additional water was added to achieve the required water/solid ratio and the mixture was homogenised for at least 5 further minutes. Specimens were made from this mixture by compacting it in a Proctor mould having an internal diameter of 10.2 cm and a height of 11.7 cm according to the standard NF P 94 093 (i.e. with 6 complete rotations of the mould instead of 3 as in the standard NBN EN 13682-2). The pastilles were compacted in three layers, each layer being compacted by applying 25 blows.

The stainless steel slag material was obtained by crushing a stainless steel slag, sieving off the smallest fraction, removing the particles larger than 0.5 mm from this smallest fraction by means of a hydrosizer and filtering the overflow to obtain the 0/0.5 mm fraction. The granular stainless steel slag had thus a particle size distribution ranging from 0 to 500 µm. The particle size distribution is illustrated in Figure 1. The stainless steel slag material had a D₁₀ value of about 35 µm and a D₆₀ value of about 110 µm. The particle size uniformity coefficient of the stainless steel slag material was thus equal to about 3.1. The stainless steel slag material was fresh so that it contained some free calcium oxide but no calcium hydroxide or calcium carbonate.

As plasticizing material two types of sewage sludge were used namely unhygienised sewage sludge and sewage sludge hygienised with calcium oxide. The sewage sludge had a moisture content of about 60% and an organic matter content of 12 - 14% by wet weight. The hygienised sludge contained about 7% by wet weight of calcium oxide. 10 parts of the wet sewage sludge were mixed with 90 parts of the dried stainless steel slag corresponding to a dry weight ratio of 4.8 parts by dry weight sewage sludge to 95.2 parts by dry weight of stainless steel slag material.

As pozzolanic material use was made of glass cullet, having a size of 0 to 10 mm, which was finely milled with a ball mill to achieve a Blaine specific surface area of about 3000 cm²/g. This finely milled glass cullet was first activated in an alkaline solution containing either NaOH or a combination of NaOH and Ca(OH)₂. The alkaline solution was a concentrated solution wherein the glass powder was allowed to dissolve until a gel was produced (for example after 1 hour at ambient temperature).

The Proctor values of the different mixtures were determined, i.e. the water content at which in a Proctor test the highest dry density is obtained. Moisture contents which were close to this Proctor value were used in the following tests:

**Table 1: Compositions of the water barrier materials of Tests 1 to 6.**

| | Fresh steel slag fraction (0/0.5 mm) | Sewage sludge | Hygienised sewage sludge | Glass cullet | NaOH | Ca(OH)₂ | Water / solid ratio |
|---|---|---|---|---|---|---|---|
| | % by dry wt. of steel slag and sludge | | | % by dry wt. of the steel slag fraction | | | % |
| First series of tests | | | | | | | |
| Test 1 | 95.2 | - | 4.8 | 6.8 | 1.2 | - | 23.5 |
| Test 2 | 95.2 | 4.8 | - | 6.8 | 1.2 | - | 25.0 |
| Test 3 | 95.2 | - | 4.8 | 6.9 | 0.2 | 1.0 | 25.0 |

| Second series of tests | | | | | | | |
|---|---|---|---|---|---|---|---|
| Test 4 (comp.) | 95.2 | - | 4.8 | - | - | - | 22.7 |
| Test 5 | 95.2 | - | 4.8 | 6.9 | 1.2 | - | 22.7 |
| Test 6 | 95.2 | - | 4.8 | 6.9 | 0.2 | 1.0 | 22.7 |

The dry densities measured for the pastilles of Tests 5 and 6 were respectively about 1600 kg/m³ and 1560 kg/m³.

The tests were carried out in two series, with different sources of stainless steel slag material and glass cullet.

For the first series of tests, the compression strength of the pastilles was measured with a Controlab hydraulic press of type E0160S. The pastilles of Tests 1 and 2 were so plastic that no compression strength could be measured. For the pastille of Test 3 the compression strength could be measured but comprised only 0.4 MPa. This material was thus also still plastic. A possible explanation for the higher compression strength obtained in Test 3 could be that more CSH gel was produced due to the fact that not only the sewage sludge and the stainless steel slag material contained some free lime but that additionally the alkaline activation of the glass cullet was partially carried out by means of calcium oxide.

The permeability (or hydraulic conductivity) of the water barrier material of the first series of tests has been measured by means of an oedometer-permeameter whilst the permeability of the material of the second series of test has been measured in a triaxial cell wherein a pressure gradient of 200 kPa was applied.

**Table 2: Permeabilities/hydraulic conductivities of the water barrier material of Tests 1 to 6**

| First series of tests | |
|---|---|
| Test 1 | 3.7 10⁻¹⁰ m/s |
| Test 2 | 8.3 10⁻¹⁰ m/s |
| Test 3 | 1.3 10⁻⁸ m/s |

| Second series of tests | |
|---|---|
| Test 4 (comp.) | 2.5 10⁻⁹ m/s |
| Test 5 | 5.0 10⁻¹⁰ m/s |
| Test 6 | 2.0 10⁻⁹ m/s |

The result of Test 4 shows that the combination of the stainless steel slag powder and the sewage sludge enables to achieve already a quite low permeability. Tests 1, 2, 5 and 6 show that the permeability can be further reduced with a silica-gel material obtained by an alkaline activation of finely milled glass cullet powder, in particular to achieve a hydraulic conductivity which is sufficiently low for landfill cover and liner applications.

In Test 3 the glass cullet powder was activated by means of 1% of Ca(OH)₂ (on the stainless steel slag material) whilst the sewage sludge was hygienised with about 7% by wet weight of CaO. Apparently, the amount of CSH gel produced by reaction of this free lime with the glass cullet powder may have a negative effect on the permeability as in this test the permeability was not low enough for landfill cover applications.

The pH of the barrier materials of Tests 4 to 6 has been measured by comminuting the compacted water barrier samples to a particle size of less than 10 mm and by immersing the samples for 24 hours in distilled water at a liquid/solid ratio of 10:1 and by measuring the pH of the water. The pH's were respectively 12.6, 12.7 and 12.7.

The leaching of heavy metals from the barrier materials of Tests 4 to 6 has also been measured in accordance with the standard DIN 38414-S4. The following leaching values were obtained for Cr, Cr VI, Mo and Ni:

**Table 3: Heavy metal leaching values in mg/l for the water barrier material of Tests 4 to 6**

| | Test 4 (comp.) | Test 5 | Test 6 |
|---|---|---|---|
| Final pH | 12.6 | 12.7 | 12.7 |
| Cr tot. | 0.15 | 0.38 | 0.15 |
| Cr IV | 0.15 | 0.35 | 0.15 |
| Mo | 0.18 | 1.15 | 0.38 |
| Ni | 0.89 | 1.05 | 1.02 |

The leaching values of other heavy metals were also measured, in particular of Al, Cd, Co, Cu, Pb, Sb, Ti, Zn, but only very small values were measured which were mostly even below the detection limits.

### Experiment 2

In this example the Tests 4 to 6 of Example 1 were repeated with the same materials. The only difference was that the pastilles were made manually instead of by means of the Proctor apparatus.

**Table 4: Compositions of the water barrier materials of Tests 7 to 9.**

| | Fresh steel slag fraction (0/0.5 mm) | Hygienised sewage sludge | Glass cullet | NaOH | Ca(OH)₂ | Water / solid ratio |
|---|---|---|---|---|---|---|
| | % by dry wt. of steel slag and sludge | | % by dry wt. of the steel slag fraction | | | % |
| Test 7 (comp.) | 95.2 | 4.8 | | - | - | 22.7 |
| Test 8 | 95.2 | 4.8 | 6.9 | 1.2 | - | 22.7 |
| Test 9 | 95.2 | 4.8 | 6.9 | 0.2 | 1.0 | 22.7 |

The permeabilities of the pastilles of Tests 7 to 9 have again been measured in a triaxial cell wherein a pressure gradient of 200 kPa and also of 26 kPa was applied after one week of aging.

**Table 5: Permeabilities/hydraulic conductivities of the water barrier materials of Tests 7 to 9**

| | Δ P = 26 kPa | Δ P = 200 kPa |
|---|---|---|
| Test 7 (comp.) | 5.7 10⁻⁹ m/s | 5.1 10⁻⁹ m/s |
| Test 8 | 2.1 10⁻⁹ m/s | 1.6 10⁻⁹ m/s |
| Test 9 | 4.0 10⁻⁹ m/s | 3.8 10⁻⁹ m/s |

The permeabilities of the manually made pastilles were somewhat higher than the permeabilities of the pastilles made with the Proctor apparatus. When comparing the permeabilities of Tests 8 and 9, it can again be observed that the use of calcium hydroxide for activating the glass cullet may have a (small) negative effect on the permeability of the material.

The effect of different aging periods on the permeability of the materials, measured with a pressure gradient of 200 MPa, has also been determined.

**Table 6: Permeabilities/hydraulic conductivities of the water barrier materials of Tests 7 to 9 after different aging periods.**

| Age of the sample | 1 week | 1.5 months | 6 months | 9 months | 12 months |
|---|---|---|---|---|---|
| | Permeability coefficient k (m/s) | | | | |
| Test 7 (comp.) | 5.1 10⁻⁹ | 1.9 10⁻⁹ | 6.8 10⁻¹⁰ | 4.2 10⁻¹⁰ | 5.5 10⁻¹⁰ |
| Test 8 | 1.6 10⁻⁹ | 1.3 10⁻¹² | 1.6 10⁻¹¹ | 1.1 10⁻¹¹ | 1.3 10⁻¹¹ |
| Test 9 | 3.8 10⁻⁹ | 2.0 10⁻¹² | 8.3 10⁻¹¹ | 1.4 10⁻¹¹ | 9.9 10⁻¹² |

It can be seen that the permeability of the water barrier materials decreases over time. This is also the case for the stainless steel slag material that doesn't contain activated glass powder (Test 7). The decreasing permeability could possibly be explained by a natural carbonation of the material. For the water barrier materials that contain activated glass powder, a larger decrease has however been observed. This larger decrease can be explained by the fact that additional silica-gel is formed from the portion of the glass cullet particles that remained in the water barrier material. As a matter of fact, notwithstanding the high specific Blaine surface of the glass powder, and the prior activation thereof in a highly alkaline aqueous solution, the main part of the glass powder particles were not dissolved and can thus continue for years, or even centuries, producing new silica-gel material. Due to this in-situ silica-gel and carbonate formation, the permeabilities which were initially too high due to an insufficient compaction of the material dropped to values well below 10⁻⁹ m/s. In case small tears or cracks would be formed over time in the barrier material, these cracks can moreover be repaired by means of newly formed silica-gel material which is continuously produced in the water barrier material.

The materials of Tests 8 and 9 (aged for one day) have also been subjected to mechanical tests. From triaxial shear resistance tests it appeared that these materials behaved like sand, with high values for the internal friction angle and low values for the cohesion, so that these materials are suitable for the stability of slopes. Since a water barrier layer often also comprises a plastic foil, in particular a high density polyethylene foil, the resistance against sliding has also been measured between a HDPE foil and the water barrier materials of Tests 8 and 9. The maximum sliding angle was respectively equal to about 35.2 degrees and respectively 30.5 degrees, which is much larger than the sliding angle of about 10.0 degrees obtained with natural clay. Again, the water barrier materials of the present invention are more appropriate for being applied onto slopes than natural clay water barrier materials.

Erosion test have also been carried out. The obtained erosion values were small.

### Experiment 3

In this example the Tests 7 to 9 have been modified by the use of a larger amount of sewage sludge. An additional comparative Test 13 was done with a 33.4% sodium silicate solution instead of glass cullet.

**Table 7: Compositions of the water barrier materials of Tests 10 to 13.**

| | Fresh steel slag fraction (0/0.5 mm) | Hygienised sewage sludge | Glass cullet | NaOH | Ca(OH)₂ | Na silicate | Water / solid ratio |
|---|---|---|---|---|---|---|---|
| | % by dry wt. of steel slag and sludge | | % by dry wt. of the steel slag fraction | | | % on total | % |
| Test 10 | | | | | | | 22.6 |
| Test 11 | 82.1 | 17.9 | 6.9 | 1.2 | - | - | 22.3 |
| Test 12 | | | 6.9 | 0.2 | 1.0 | | 22.8 |
| Test 13 (comp.) | | | - | - | - | 2.3 | 23.6 |

For Tests 10 to 12, the NaOH was first dissolved in water to obtain a saturated solution. After cooling this alkaline solution, which the glass powder was added thereto and was allowed to form a gel by a partial activation of this glass powder. The solid materials (including any Ca(OH)₂) were mixed and subsequently the activated glass cullet was added thereto. The moulds were filled in different steps.

For Test 13, the solid materials were first mixed, after which the sodium silicate solution was added thereto.

The dry densities of the pastilles made with the Protor apparatus were measured and also the permeabilities thereof. The permeabilities were measured with an oedometer-permeameter in accordance with the standard NBN CEN ISO/TS 17892-11 by applying a load of 20 kg, and thus a pressure of 1 kg/cm², which corresponds to a height of the material which can be estimated at about 5 m. For each test, two or three measurements were done at regular intervals.

**Table 8: Permeabilities/hydraulic conductivities and dry densities of the water barrier materials of Tests 10 to 13.**

| | Test 10 | Test 11 | Test 12 | Test 13 (comp.) |
|---|---|---|---|---|
| Permeability (m/s) | 1.32 10⁻¹⁰ | 1.24 10⁻¹⁰ | 2.6 10⁻¹⁰ | 1.35 10⁻¹⁰ |
| | 1.29 10⁻¹⁰ | 1.14 10⁻¹⁰ | 3.14 10⁻¹⁰ | 1.26 10⁻¹⁰ |
| | - | 1.22 10⁻¹⁰ | - | 1.36 10⁻¹⁰ |
| Dry density | 1450 kg/m³ | 1490 kg/m³ | 1460 kg/m³ | 1430 kg/m³ |

These test results demonstrate that with finely milled glass cullet, which is a waste product, a same low permeability can be obtained than with sodium silicate. As demonstrated in Example 2, activated glass powder has moreover the advantage that it doesn't dissolve completely so that new silica-gel material is continuously formed in situ in the alkaline water barrier material.

For the water barrier materials of Tests 11 to 13 the Atterberg limits have be determined in accordance with the ASTM standard test method D 4318, more particularly the liquid limit (Lₗ) and the plastic limit (Lₚ), the plasticity index (Iₚ) being the difference between the liquid limit and the plastic limit.

**Table 9: Atterberg limits in % moisture of the water barrier materials of Tests 11 to 13.**

| | Lₗ | Lₚ | Iₚ |
|---|---|---|---|
| Test 11 | 39.0 | 32.2 | 6.8 |
| Test 12 | 42.4 | 35.7 | 6.7 |
| Test 13 (comp.) | 47.8 | 38.5 | 9.2 |

A plasticity index of 0 indicates a non-plastic material, a plasticity index of 1 to 5 a slightly plastic material and a plasticity index of 5 to 10 a material with a low plasticity, such as for example a clayey sand. It can be seen that the water barrier material made with sodium silicate had a somewhat higher plasticity than the water barrier materials made with glass powder. The glass powder had a Blaine specific surface area of 3000 cm²/g. Tests done with a less fine glass powder, having a Blaine specific surface area of 2000 cm²/g, showed that the material was less subjected to deformations under a predetermined load, it was less plastic, and its permeability was slightly higher.

### Experiment 4

In the previous experiments the glass cullet was activated under alkaline conditions, in particular with sodium hydroxide. When mixing a sodium hydroxide solution, having a pH of 13.4, with the fine stainless steel slag fraction (500 g in 190 ml of the solution), it was found that after 4 hours, the pH dropped to 13.2 and after 48 hours to 13.1. The stainless steel slag material exerted clearly a buffering effect on the pH.

Since in contrast to the other raw materials used to produce the water barrier material sodium hydroxide is not a waste product, and since it might have an effect on the remobilisation of heavy metals contained in the stainless steel slag material, tests were done with less and with no sodium hydroxide.

**Table 10: Compositions of the water barrier materials of Tests 14 and 15.**

| | Fresh steel slag fraction (0/0.5 mm) | Hygienised sewage sludge | Glass cullet | NaOH | Water / solid ratio |
|---|---|---|---|---|---|
| | % by dry wt. of steel slag and sludge | | % by dry wt. of the steel slag fraction | | % |
| Test 14 | 90 | 10 | 6.9 | 0.6 | |
| Test 15 | | | | - | 23.6 |

After some days of aging, the small amount of sodium hydroxide had no effect on the pH of the mixture. The pH's of the different samples that were made were each time comprised between pH 12 and 13.

The permeability of the material of Test 15, measured after one week of aging, was slightly larger than the permeability of the material of Test 14, namely 3.2 10⁻¹⁰ versus 1.5 10⁻¹⁰ but remained well below the limit of 1.0 10⁻⁹. Moreover, since the pH's of the materials of both tests were about the same, further silica-gel will be produced in situ, also in the material without sodium hydroxide, so that similar permeabilities will be achieved after a longer period of aging.

### Experiment 5

In Experiment 1 relatively high leaching values have been measured for Cr IV, Mo and Ni (see Table 3). In this experiment, sewage sludge has been replaced by a clay material as plasticizing material in order to try to obtain lower heavy metal leaching values;

The following compositions were made by compacting the mixtures at a pressure of 50 kg/cm² in a mould having a diameter of 54.8 mm:

**Table 11: Compositions of the water barrier materials of Tests 16 to 18.**

| | Fresh steel slag fraction (0/0.5 mm) | Dry clay | Dry bentonite | Clay soil | Glass cullet | NaOH | Water / solid ratio |
|---|---|---|---|---|---|---|---|
| | % by dry wt. of steel slag and clay/bentonite | | | | % by dry wt. of the steel slag fraction | | % |
| Test 16 | 90 | 10 | - | | 6.9 | 1.2 | 20 |
| Test 17 | 90 | - | 10 | | 6.9 | 1.2 | 22 |
| Test 18 | 90 | - | - | 10 | 6.9 | 0.6 | 0.18 |

The compacted mixtures of Tests 16 and 17 had respectively a dry density of about 1800 and about 1700 kg/m³.

The leaching of heavy metals has been measured again in accordance with the standard DIN 38414-S4. The following leaching values were obtained for Cr, Cr VI, Mo and Ni:

**Table 12: Heavy metal leaching values in mg/l for the water barrier material of Tests 16 to 18**

| | Test 16 | Test 17 | Test 18 |
|---|---|---|---|
| Final pH | 12.6 | 12.6 | 13.0 |
| Cr tot. | 0.2 | 0.4 | 0.29 |
| Cr IV | 0.1 | 0.2 | <0.1 |
| Mo | 0.4 | 0.4 | 0.45 |
| Ni | <0.1 | <0.1 | <0.1 |

These results demonstrate that especially the leaching of Ni can be reduced by using a clay material, in particular a pure clay, a bentonite clay or a clay soil as plasticizing material. The reduced leaching of nickel may possibly be explained by the fact that under the alkaline conditions sewage sludge may produce ammoniac which may form complexes with some heavy metals, in particular with nickel, such as for example Ni(NH₃)₆³⁺.

The following permeabilities were obtained:

**Table 13: Permeabilities/hydraulic conductivities of the water barrier materials of Tests 16 to 18 after different aging periods.**

| Age of the sample | 2.5 days | 6 days | 7 days | 12 days |
|---|---|---|---|---|
| | Permeability coefficient k (m/s) | | | |
| Test 16 | 1.1 10⁻⁹ | 8.0 10⁻¹⁰ | 6.3 10⁻¹⁰ | 3.0 10⁻¹⁰ |
| Test 17 | 1.0 10⁻⁹ | 7.0 10⁻¹⁰ | 6.0 10⁻¹⁰ | 2.0 10⁻¹⁰ |
| Test 18 | 1.5 10⁻⁹ | 8 10⁻¹⁰ | - | - |

These results show that after a few days of aging, a sufficiently low permeability is obtained, even with a clay soil and with a smaller amount of sodium hydroxide to activate the glass powder.

### Experiment 6

In this Experiment the positive effect of the fines in the steel slag material on the permeability has been demonstrated.

The following compositions were made:

**Table 14: Compositions of the water barrier materials of Tests 16 and 17.**

| | Fresh steel slag fraction (0.075/0.5 mm) | Quartz sand mixture (0.075/0.5 mm) | Clay soil | Glass cullet | NaOH | Water / solid ratio | Dry density | pH |
|---|---|---|---|---|---|---|---|---|
| | % by dry wt. of steel slag and clay | | | % by dry wt. of the steel slag fraction | | % | kg/m³ | |
| Test 19 | 80 | - | | | | 17.6 | 1722 | 12.0 |
| Test 20 | 80 | - | | | | 18.8 | 1692 | 12.1 |
| Test 21 | 80 | - | | | | 18.2 | 1725 | 12.0 |
| Test 22 | - | 80 | | | | 16.5 | 1679 | 12.7 |
| Test 23 | - | 80 | | | | 14.8 | 1684 | 12.6 |
| Test 24 | - | 80 | 20 | 6.9 | 0.6 | 13.7 | 1752 | 12.6 |

The fresh stainless steel slag fraction was made by sieving off the particles smaller than 75 µm from a 0.0/0.5 mm stainless steel slag fraction. The quartz sand mixture was made by mixing 56% of a 0.07/0.15 mm quartz sand with 44% of a 0.10/0.50 mm quartz sand so that the particle size distribution substantially fitted with the particle size distribution of the 0.075/0.5 mm stainless steel slag fraction. The D₁₀ value of the stainless steel slag fraction was about 88 µm whilst its D₆₀ value was about 140 µm so that its particle size uniformity coefficient, defined by it D₆₀/D₁₀ ratio was about 1.6.

Due to its quite high D₁₀ value and the relatively small particle size uniformity coefficient, the water barrier materials made with this stainless steel slag fraction had a relatively large permeability, notwithstanding the large amount of clay soil incorporated therein. In the following table the permeabilities are given.

**Table 15: Permeabilities/hydraulic conductivities of the water barrier materials of Tests 19 to 24 after different aging periods.**

| Age of the sample | 2.5 days | 6 days | 7 days | 9 days |
|---|---|---|---|---|
| | Permeability coefficient k (m/s) | | | |
| Test 19 | 7.8 10⁻⁹ | 8.5 10⁻⁹ | 4.8 10⁻⁹ | 4.5 10⁻⁹ |
| Test 20 | 1.2 10⁻⁸ | 3.3 10⁻⁹ | 3.4 10⁻⁹ | 2.8 10⁻⁹ |
| Test 21 | 6.4 10⁻⁹ | 6.5 10⁻⁹ | 3.5 10⁻⁹ | 3.1 10⁻⁹ |
| Test 22 | - | - | - | 8.9 10⁻⁹ |
| Test 23 | - | - | - | 1.0 10⁻⁸ |
| Test 24 | - | - | - | 1.4 10⁻⁸ |

It can be seen that, notwithstanding the same particle size distribution, the water barrier materials produced with the stainless steel slag fraction has a somewhat lower permeability than the water barrier materials produce with the sand mixture after 9 days of aging. This may possibly be explained by the in-situ silica-gel formation that continues in the barrier material made of the stainless steel slag fraction or by other neoformed phases that may be produced in the stainless steel slag fraction. This is not the case in quartz sand since quartz sand is inert under the conditions prevailing in the water barrier material.

When comparing the permeabilities of the water barrier materials of Tests 19 to 21 with the permeability of the water barrier material of Test 18 it appears that the permeability of the materials of Tests 19 to 21 is considerably higher, notwithstanding the fact that these materials contained twice as much of the clay soil. It thus appears that the amount of fines in the steel slag fraction, and the particle size uniformity coefficient, has an important effect on the permeability of the material. It does not only affects the porosity of the material but the fines may also provide a larger specific surface area enhancing the production of neoformed phases such as for example silica-gels, CSH gels, carbonates, etc., especially when the steel slag material comprises a portion of amorphous phases and optionally portlandite.

### Experiment 7

In this Experiment the buffering effect of stainless steel slag material has been demonstrated.

A sample of the dry equivalent of 15 g of the specimen from test 21 made from stainless steel slag was mixed with demineralised water at a liquid/solid ratio of 10/1. Subsequently, the pH was monitored whilst adding a solution containing 2 moles/l nitric acid. The same test was also done with a sample of the dry equivalent of 15 g of the specimen from test 22 made from quartz sand. These two samples were those which gave rise to the lowest hydraulic conductivities of their own series. The results are indicated in Figure 2.

It can be seen that the stainless steel slag material has a large buffer capacity. The pH of the water barrier material containing this steel slag material will therefore remain quite high even when being exposed accidentally to an acid medium, or even after a long period of natural carbonation. Due to the high pH of the barrier material, new silicagel will continuously be formed by the solid particles of pozzolanic material contained therein.

## Claims

1. A method for producing a water barrier material for use as landfill cover or capping or as landfill liner underneath and/or aside of a landfill, wherein a granular material is mixed with a pozzolanic material which comprises solid particles and with a plasticizing material to produce a mixture and wherein pores present in said mixture are at least partially filled with a silica-gel to reduce the hydraulic conductivity of the water barrier material formed by said mixture,
**characterised in that**
said granular material comprises a comminuted steel slag material:
- which has a calcium content, expressed as % CaO, of at least 30% by dry weight and a silicon content, expressed as % SiO₂, of at least 15% by dry weight;
- which is alkaline and incorporated in an amount of at least 40% by dry weight in the water barrier material so that the water barrier material has a pH higher than 8.0, preferably higher than 8.5 and more preferably higher than 9.0;
- which comprises more than 50% by dry weight of crystalline phases;
- which has a particle size distribution showing a D₁₀ value smaller than 100 µm,
and **in that** said pozzolanic material comprises at least silicon and either no calcium or such an amount of calcium that it has a basicity, defined as the ratio between its calcium content, expressed as % CaO, and its silicon content, expressed as % SiO₂, which is smaller than 0.20, preferably smaller than 0.15, said silica-gel being produced by alkaline activation of the solid particles of said pozzolanic material at least partially in the alkaline water barrier material and optionally in an alkaline solution before being mixed with said granular material with a portion of the solid particles of the pozzolanic material remaining in the barrier material.

2. A method according to claim 1, wherein said comminuted steel slag material has substantially no hydraulic properties.

3. A method according to claim 1 or 2, wherein said steel slag material comprises no free lime, consisting of free calcium oxide and/or free calcium hydroxide, or has a free lime content which is smaller than 6% by dry weight, preferably smaller than 4% by dry weight, more preferably smaller than 2% by dry weight and most preferably smaller than 1 % by dry weight of free lime expressed as CaO.

4. A method according to any one of the claims 1 to 3, wherein said steel slag material is a stainless steel slag material which has in particular a chromium content of at least 1000 mg Cr/kg, more particularly of at least 2000 mg Cr/kg.

5. A method according to any one of the claims 1 to 4, wherein the calcium content of said steel slag material, expressed as % CaO, is at least 40% by dry weight and its silicon content, expressed as % SiO₂, at least 20% by dry weight.

6. A method according to any one of the claims 1 to 5, wherein said steel slag material constitutes at least 50%, preferably at least 60% and more preferably at least 70% by dry weight of said water barrier material.

7. A method according to any one of the claims 1 to 6, wherein the D₁₀ value of said steel slag material is smaller than 70 µm, preferably smaller than 40 µm and more preferably smaller than 20 µm.

8. A method according to any one of the claims 1 to 7, wherein the particle size distribution of said comminuted steel slag material shows a D₆₀ value and said comminuted steel slag material has a particle size uniformity coefficient, defined as the ratio between its D₆₀ value and its D₁₀ value, which is larger than 2, preferably larger than 4 and more preferably larger than 6.

9. A method according to any one of the preceding claims, wherein use is made of at least 2, preferably at least 3, more preferably at least 4 and most preferably at least 5 parts by dry weight of said pozzolanic material for producing 100 parts by dry weight of said water barrier material, said pozzolanic material being preferably used in an amount of less than 20 parts by dry weight for producing 100 parts by dry weight of said water barrier material.

10. A method according to any one of the preceding claims, wherein said pozzolanic material has a silicon content, expressed as % SiO₂, of at least 45%, preferably of at least 55% and more preferably of at least 65 % by dry weight.

11. A method according to any one of the preceding claims, wherein said pozzolanic material comprises class F fly ash, the basicity of which is smaller than 0.20, preferably smaller than 0.15.

12. A method according to any one of the preceding claims, wherein said pozzolanic material comprises glass powder, in particular a soda-lime glass powder.

13. A method according to any one of the preceding claims, wherein said pozzolanic material has a Blaine specific surface area of at least 1000 cm²/g, preferably of at least 2000 cm²/g, and more preferably of at least 3000 cm²/g.

14. A method according to any one of the preceding claims, wherein the solid particles of said pozzolanic material are activated in an alkaline solution before being mixed with said granular material, said alkaline solution being made with at least one alkaline substance which is different from waterglass and which comprising preferably sodium and/or potassium hydroxide.

15. A water barrier material obtained by a method according to any one of the previous claims.

16. Use of the water barrier material according to claim 15 for producing a water barrier underneath, aside and/or on top of a landfill.

## Patentansprüche

1. Ein Verfahren zur Herstellung eines wasserdichten Materials zur Anwendung als Überzug oder Abdeckung einer Mülldeponie oder als Unterfütterung unter und/oder neben einer Mülldeponie, wobei ein körniges Material mit einem puzzolanischen Material, das feste Partikel enthält, und mit einem Plastifizierungsmittel vermischt wird, um eine Mischung herzustellen, und wobei die in der erwähnten Mischung vorhandenen Poren zumindest teilweise mit einem Silicagel gefüllt sind, um die Wasserleitfähigkeit des wasserdichten Materials, gebildet durch die erwähnte Mischung, zu reduzieren, **dadurch gekennzeichnet, dass**
das erwähnte körnige Material ein zerkleinertes Stahlschlackenmaterial umfasst:
- welches einen Calciumgehalt, ausgedrückt als % CaO, von mindestens 30 % Trockenmasse und einen Siliciumgehalt, ausgedrückt als % SiO₂, von mindestens 15 % Trockenmasse hat;
- welches alkalisch ist und in einer Menge von mindestens 40 % Trockenmasse im wasserdichten Material enthalten ist, sodass das wasserdichte Material einen pH-Wert von mehr als 8,0, bevorzugt mehr als 8,5 und noch besser mehr als 9,0 hat;
- welches mehr als 50 % Trockenmasse kristalliner Phasen enthält;
- welches eine Partikelgrößenverteilung mit einem D₁₀-Wert unter 100 µm aufweist,
und dadurch, dass das erwähnte puzzolanische Material zumindest Silicium und entweder kein Calcium oder eine solche Menge von Calcium enthält, dass es eine Basizität, definiert als das Verhältnis zwischen seinem Calciumgehalt, ausgedrückt als % CaO, und seinem Siliciumgehalt, ausgedrückt als SiO₂, aufweist, welche niedriger ist als 0,20, bevorzugt niedriger als 0,15, wobei das erwähnte Silicagel durch alkalische Aktivierung der festen Partikel des erwähnten puzzolanischen Materials zumindest teilweise im alkalischen wasserdichten Material hergestellt wird und optional in einer alkalischen Lösung, bevor es mit dem erwähnten körnigen Material vermischt wird, wobei ein Teil der festen Partikel des puzzolanischen Materials im dichten Material übrig bleiben.

2. Ein Verfahren nach Anspruch 1, wobei das erwähnte zerkleinerte Stahlschlackenmaterial im Wesentlichen keine hydraulischen Eigenschaften hat.

3. Ein Verfahren nach Anspruch 1 oder 2, wobei das erwähnte Stahlschlackenmaterial keinen freien Kalk, bestehend aus freiem Calciumoxid und/oder freiem Calciumhydroxid, enthält oder einen Gehalt an freiem Kalk aufweist, der geringer ist als 6 % Trockenmasse, bevorzugt geringer als 4 % Trockenmasse, noch besser geringer als 2 % Trockenmasse und am besten geringer als 1 % Trockenmasse an freiem Kalk, ausgedrückt als CaO.

4. Ein Verfahren nach irgendeinem der Ansprüche 1 bis 3, wobei das erwähnte Stahlschlackenmaterial ein rostfreies Stahlschlackenmaterial ist, welches insbesondere einen Chromgehalt von mindestens 1.000 mg Cr/kg, genauer von mindestens 2.000 mg Cr/kg aufweist.

5. Ein Verfahren nach irgendeinem der Ansprüche 1 bis 4, wobei der Calciumgehalt des erwähnten Stahlschlackenmaterials, ausgedrückt als % CaO, mindestens 40 % Trockenmasse und sein Siliciumgehalt, ausgedrückt als % SiO₂, mindestens 20 % Trockenmasse beträgt.

6. Ein Verfahren nach irgendeinem der Ansprüche 1 bis 5, wobei das erwähnte Stahlschlackenmaterial mindestens 50 %, bevorzugt mindestens 60 % und noch besser mindestens 70 % Trockenmasse des erwähnten wasserdichten Materials ausmacht.

7. Ein Verfahren nach irgendeinem der Ansprüche 1 bis 6, wobei der D₁₀-Wert des erwähnten Stahlschlackenmaterials geringer ist als 70 µm, bevorzugt geringer als 40 µm und noch besser geringer als 20 µm ist.

8. Ein Verfahren nach irgendeinem der Ansprüche 1 bis 7, wobei die Partikelgrößenverteilung des erwähnten zerkleinerten Stahlschlackenmaterials einen D₆₀-Wert aufweist und das erwähnte zerkleinerte Stahlschlackenmaterial einen Gleichförmigkeitskoeffizienten der Partikelgröße, definiert als das Verhältnis zwischen seinem D₆₀-Wert und seinem D₁₀-Wert, hat, welcher höher als 2 ist, bevorzugt höher als 4 und noch besser höher als 6.

9. Ein Verfahren nach irgendeinem der vorigen Ansprüche, wobei zumindest 2, bevorzugt zumindest 3, noch besser zumindest 4 und am besten zumindest 5 Teile Trockenmasse des erwähnten puzzolanischen Materials verwendet werden, um 100 Teile Trockenmasse des erwähnten wasserdichten Materials herzustellen, wobei das erwähnte puzzolanische Material bevorzugt in einer Menge von weniger als 20 Teilen Trockenmasse zur Herstellung von 100 Teilen Trockenmasse des erwähnten wasserdichten Materials verwendet wird.

10. Ein Verfahren nach irgendeinem der vorigen Ansprüche, wobei das erwähnte puzzolanische Material einen Siliciumgehalt, ausgedrückt als % SiO₂, von mindestens 45 %, bevorzugt mindestens 55 % und noch besser mindestens 65 % Trockenmasse hat.

11. Ein Verfahren nach irgendeinem der vorigen Ansprüche, wobei das erwähnte puzzolanische Material Flugasche der Klasse F enthält, deren Basizität niedriger als 0,20 ist, bevorzugt niedriger als 0,15.

12. Ein Verfahren nach irgendeinem der vorigen Ansprüche, wobei das erwähnte puzzolanische Material Glaspulver enthält, insbesondere Soda-Kalk-Glaspulver.

13. Ein Verfahren nach irgendeinem der vorigen Ansprüche, wobei das erwähnte puzzolanische Material eine Blainespezifische Oberfläche von mindestens 1.000 cm²/g aufweist, bevorzugt mindestens 2.000 cm²/g, und noch besser mindestens 3.000 cm²/g.

14. Ein Verfahren nach irgendeinem der vorigen Ansprüche, wobei die festen Partikel des erwähnten puzzolanischen Materials in einer alkalischen Lösung aktiviert werden, bevor sie mit dem erwähnten körnigen Material vermischt werden, wobei die erwähnte alkalische Lösung mit zumindest einer alkalischen Substanz gemacht wird, die sich von Wasserglas unterscheidet und bevorzugt Natrium- und/oder Kaliumhydroxid enthält.

15. Ein wasserdichtes Material erhalten durch ein Verfahren nach irgendeinem der vorigen Ansprüche.

16. Verwendung des wasserdichten Materials nach Anspruch 15 zur Herstellung einer wasserdichten Schicht unter, neben und/oder über einer Mülldeponie.

## Revendications

1. Procédé de production d'un matériau faisant barrière à l'eau destiné à être utilisé en tant que couverture ou recouvrement de décharge ou en tant que confinement de décharge en dessous et/ou sur le côté d'une décharge, dans lequel un matériau granulaire est mélangé à un matériau pouzzolanique qui comprend des particules solides et à un matériau plastifiant pour produire un mélange et dans lequel les pores présents dans ledit mélange sont au moins partiellement remplis d'un gel de silice pour réduire la conductivité hydraulique du matériau faisant barrière à l'eau formé par ledit mélange,
**caractérisé en ce que**
ledit matériau granulaire comprend un matériau de scorie d'acier pulvérisé :
- qui présente une teneur en calcium, exprimée en % de CaO, d'au moins 30 % en poids sec et une teneur en silicium, exprimée en pourcentage de SiO₂, d'au moins 15 % en poids sec ;
- qui est alcalin et incorporé dans une quantité d'au moins 40 % en poids sec dans le matériau faisant barrière à l'eau de telle sorte que le matériau faisant barrière à l'eau a un pH supérieur à 8,0, de préférence, supérieur à 8,5 et de manière davantage préférée, supérieur à 9,0 ;
- qui comprend plus de 50 % en poids sec de phases cristallines ;
- qui a une répartition granulométrique présentant une valeur D₁₀ inférieure à 100 µm,
et **en ce que** ledit matériau pouzzolanique comprend au moins du silicium et soit aucun calcium, soit une quantité de calcium telle qu'il présente une basicité, définie comme le rapport entre sa teneur en calcium, exprimée en % de CaO, et sa teneur en silicium, exprimée en % de SiO₂, qui est inférieure à 0,20, de préférence, inférieure à 0,15, ledit gel de silice étant produit par activation alcaline des particules solides dudit matériau pouzzolanique au moins partiellement dans le matériau faisant barrière à l'eau alcalin et éventuellement dans une solution alcaline avant d'être mélangé avec ledit matériau granulaire, une partie des particules solides du matériau pouzzolanique restant dans le matériau faisant barrière.

2. Procédé selon la revendication 1, dans lequel ledit matériau de scorie d'acier pulvérisé ne présente sensiblement pas de propriétés hydrauliques.

3. Procédé selon la revendication 1 ou 2, dans lequel ledit matériau de scorie d'acier ne comprend pas de chaux libre, constituée d'oxyde de calcium libre et/ou d'hydroxyde de calcium libre, ou présente une teneur en chaux libre qui est inférieure à 6 % en poids sec, de préférence, inférieure à 4 % en poids sec, de manière davantage préférée, inférieure à 2 % en poids sec et de manière préférée entre toutes, inférieure à 1 % en poids sec de chaux libre exprimée en CaO.

4. Procédé selon l'une quelconque des revendications 1 à 3, dans lequel ledit matériau de scorie d'acier est un matériau de scorie d'acier inoxydable qui a en particulier une teneur en chrome d'au moins 1000 mg Cr/kg, plus particulièrement, d'au moins 2000 mg de Cr/kg.

5. Procédé selon l'une quelconque des revendications 1 à 4, dans lequel la teneur en calcium dudit matériau de scorie d'acier, exprimée en pourcentage de CaO, est d'au moins 40 % en poids sec et sa teneur en silicium, exprimée en pourcentage de SiO₂, d'au moins 20 % en poids sec.

6. Procédé selon l'une quelconque des revendications 1 à 5, dans lequel ledit matériau de scorie d'acier constitue au moins 50 %, de préférence, au moins 60 % et de manière davantage préférée, au moins 70 % en poids sec dudit matériau faisant barrière à l'eau.

7. Procédé selon l'une quelconque des revendications 1 à 6, dans lequel la valeur D₁₀ dudit matériau de scorie d'acier est inférieure à 70 µm, de préférence, inférieure à 40 µm et de manière davantage préférée, inférieure à 20 µm.

8. Procédé selon l'une quelconque des revendications 1 à 7, dans lequel la répartition granulométrique dudit matériau de scorie d'acier pulvérisé présente une valeur D₆₀ et ledit matériau de scorie d'acier pulvérisé a un coefficient d'uniformité granulométrique, défini en tant que le rapport entre sa valeur D₆₀ et sa valeur D₁₀, qui est supérieur à 2, de préférence, supérieur à 4 et de manière davantage préférée, supérieur à 6.

9. Procédé selon l'une quelconque des revendications précédentes, dans lequel sont utilisées au moins 2, de préférence, au moins 3, de manière davantage préférée, au moins 4 et de manière préférée entre toutes, au moins 5 parties en poids sec dudit matériau pouzzolanique pour produire 100 parties en poids sec dudit matériau faisant barrière à l'eau, ledit matériau pouzzolanique étant de préférence utilisé dans une quantité inférieure à 20 parties en poids sec pour produire 100 parties en poids sec dudit matériau faisant barrière à l'eau.

10. Procédé selon l'une quelconque des revendications précédentes, dans lequel ledit matériau pouzzolanique a une teneur en silicium, exprimée en pourcentage de SiO₂, d'au moins 45 %, de préférence, d'au moins 55 % et de manière davantage préférée, d'au moins 65 % en poids sec.

11. Procédé selon l'une quelconque des revendications précédentes, dans lequel ledit matériau pouzzolanique comprend de la cendre volante de classe F, dont la basicité est inférieure à 0,20, de préférence, inférieure à 0,15.

12. Procédé selon l'une quelconque des revendications précédentes, dans lequel ledit matériau pouzzolanique comprend de la poudre de verre, en particulier, une poudre de verre sodocalcique.

13. Procédé selon l'une quelconque des revendications précédentes, dans lequel ledit matériau pouzzolanique a une surface spécifique de Blaine d'au moins 1000 cm²/g, de préférence, d'au moins 2000 cm²/g, et de manière davantage préférée, d'au moins 3000 cm²/g.

14. Procédé selon l'une quelconque des revendications précédentes, dans lequel les particules solides dudit matériau pouzzolanique sont activées dans une solution alcaline avant d'être mélangées avec ledit matériau granulaire, ladite solution alcaline étant composée d'au moins une substance alcaline qui est différente du verre soluble, laquelle comprenant de préférence du sodium et/ou de l'hydroxyde de potassium.

15. Matériau faisant barrière à l'eau obtenu à l'aide d'un procédé selon l'une quelconque des revendications précédentes.

16. Utilisation du matériau faisant barrière à l'eau selon la revendication 15 pour produire une barrière à l'eau en dessous, sur le côté et/ou au-dessus d'une décharge.
